# EUROPÄISCHE PATENTANMELDUNG

(11) **EP 1 303 076 A1**
(43) Veröffentlichungstag der Anmeldung: **16.04.2003**
(21) Anmeldenummer: 01440341.4
(22) Anmeldetag: 12.10.2001
(51) Int. Cl.: H04L 9/32

(54) **Verfahren zur Sicherung einer Kommunikation zwischen einem ersten Teilnehmerendgerät eines Kommunikationsnetzes und einem zweiten Teilnehmerendgerät oder einem Diensterechner, sowie Kommunikationsnetz, Netzeinrichtung, Programmmodul und Teilnehmerendgerät hierfür**

(71) Anmelder: ALCATEL, 75008 Paris (FR)
(72) Erfinder: Weik, Hartmut, 70195 Stuttgart (DE); Lautenschlager, Wolfgang, 71287 Weissach (DE)
(74) Vertreter: Brose, Gerhard

(57) **Zusammenfassung**

Die Erfindung betrifft ein Verfahren zur Sicherung einer Kommunikation zwischen einem ersten Teilnehmerendgerät (MS1) eines Kommunikationsnetzes (CN) und einem zweiten Teilnehmerendgerät (MS2) oder einem Diensterechner des Kommunikationsnetzes (CN), mit den Schritten Bereitstellen von elektronischen Daten im Teilnehmerendgerät (MS1) zur Übermittlung an das zweite Teilnehmerendgerät (MS2) oder den Diensterechner, Ermitteln gesicherter Information über den aktuellen Ort des ersten Teilnehmerendgeräts (MS1) und Generieren eines elektronischen Ortsstempels, Verknüpfen der elektronischen Daten mit dem elektronischen Ortstempel und Übermitteln dieser verknüpften Daten an das zweite Teilnehmerendgerät (MS2) oder den Diensterechner., sowie ein Kommunikationsnetz (CN), eine Netzeinrichtung (TLS) Programmmodul und Teilnehmerendgerät (MS1) hierfür.

## Beschreibung

Die Erfindung betrifft ein Verfahren zur Sicherung einer Kommunikation zwischen einem ersten Teilnehmerendgerät eines Kommunikationsnetzes und einem zweiten Teilnehmerendgerät oder einem Diensterechner nach dem Oberbegriff des Anspruchs1, sowie ein Kommunikationsnetz nach dem Oberbegriff des Anspruchs 9, eine Netzeinrichtung nach dem Oberbergriff des Anspruchs 10, ein Programmmodul nach dem Oberbegriff des Anspruchs 11 und ein Teilnehmerendgerät nach dem Oberbegriff des Anspruchs 12 hierfür.

Mit zunehmender Verbreitung des elektronischen Handels mittels Endgeräten moderner Kommunikationsnetze nimmt auch das Bedürfnis zu, elektronische Dokumente manipulationsgesichert auszutauschen. Dazu entstehen zu Zeit beispielsweise in den europäischen Ländern Gesetze zur sogenannten elektronischen Signatur, welche den technische Rahmen zur Manipulationssicherung definieren. Die Manipulationssicherung beruht dabei auf einem asymmetrischen Schlüsselverfahren. Jedem Teilnehmer ist dabei ein geheimer und ein öffentlicher Schlüssel zugeordnet. Ein zu sicherndes elektronisches Dokument wird dabei von einem Sender mittels seines geheimen Schlüssels signiert. Ein Empfänger dieses Dokuments kann die Authentizität des Senders und die Integrität des elektronischen Dokuments mittels des öffentlichen Schlüssels des Senders prüfen. Die Schlüsselvergabe wird durch besondere Registrierungsstellen vorgenommen. Zertifizierungsstellen stellen Zertifikate über die Inhaberschaft der öffentlichen Schlüssel aus.

Häufig ist es von Wichtigkeit, elektronische Daten über eine elektronische Signatur hinaus zusätzlich zu sichern. Eine wesentliche Sicherung betrifft die Dokumentation des Sendedatums. Damit wird es beispielsweise einem Empfänger ermöglicht zu überprüfen, ob ein empfangenes elektronisches Dokument ohne Verzögerung übertragen wurde. In der Patentanmeldung DE 19845198 wird ein Verfahren zur gesicherten Übertragung einer amtlichen Zeit an die Endgeräte eines Mobilfunknetzes beschrieben. Zur Sicherung gegen eine Manipulation auf dem Übertragungsweg von Zeitinformation zwischen geeigneten Einrichtungen des Mobilfunknetzes und den Endgeräten wird diese Zeitinformation netzseitig verschlüsselt. Die Endgeräte entschlüsseln diese Information und führen sie einer internen Uhr zu. Zur Dokumentation des Zeitpunkts des Sendens elektronischer Daten wird vor dem Absenden ein aktueller Zeitstempel mit der Zeit der internen Uhr generiert und mit den elektronischen Daten zusammen gesendet.

Teilnehmer eines zellularen Mobilfunknetzes, beispielsweise des GSM-Netzes, werden kontinuierlich geortet. Sobald ein Teilnehmer einen sogenannten geografischen Bereich des Netzes verlässt und in einen neuen geografischen Bereich eintritt, wird dieser Teilnehmer und der neue geografische Bereich in einer sogenannten Besucherdatei (engl.: Visitors Location Register, VLR) vermerkt. Darüber hinaus sind Verfahren bekannt, bei denen eine wesentlich genauere Ortung über die Ortung eines geographischen Bereiches hinaus ermöglicht wird. Ein bekanntes Verfahren stellt die Ortung mittels Ortungssatelliten dar, beispielsweise das sogenannte Global Positioning System (GPS), bei welchem ein mit einem entsprechenden Empfänger versehendes Mobilfunkendgerät Signale verschiedener Ortungssatelliten empfängt und daraus und der im Mobilfunkendgerät bekannten Position dieser Ortungssatelliten seinen aktuellen Ort autonom bestimmt, d.h. ohne Information oder Zuhilfenahme von Netzeinrichtungen des Mobilfunksystems.

Ein weiteres Verfahren Zur Ortung von Mobilfunkendgeräten wird in der Patentanmeldung EP1111403 beschrieben. Dabei senden die Basisstationen eines zellularen Mobilfunksystems jeweils synchronisiert ein bestimmtes Pilotsignal aus. Ein sich ortendes Mobilfunkendgerät ermittelt die Laufzeitdifferenzen mindestens der Pilotsignale dreier Basisstationen. Mit der Kenntnis der Ortskoordinaten dieser Basisstationen kann das Mobilfunkendgerät seine aktuellen Ortkoordinaten bestimmen. Die Patentschrift US6108553 beschreibt ein ähnliches Verfahren, bei welchem allerdings die Ortsbestimmung netzseitig stattfindet. Dazu sendet ein Mobilfunkgerät die Information über die Laufzeitunterschiede einem netzseitigen Ortungsserver zu, welcher, aus der Kenntnis der Positionen der entsprechenden Basisstationen die Ortsbestimmung des betreffenden Mobilfunkendgeräts vornimmt.

Bei der traditionellen Unterzeichnung von Dokumenten spielt neben der Unterschrift und der Angabe des Datums auch die Angabe des Ortes eine wesentliche Rolle. Wenn es sich bei dem unterzeichneten Dokument beispielsweise um einen Vertrag handelt, kann der Ort der Unterzeichnung aus rechtlicher Sicht bedeutsam sein.

Während ein Teilnehmer eines festen Kommunikationsnetzes seinen Ort in der Regel kennt und diesen Ort manuell einem elektronisches Dokument hinzufügen kann, gilt dies häufig nicht für Teilnehmer eines Mobilfunknetzes. Gerade beim Austausch elektronischer Daten in diesen Netzen kann eine Sicherung einer Kommunikation mittels einer Information über den aktuellen Ort eines Senders eine wichtige Rolle spielen.

Der Erfindung liegt nun die Aufgabe zugrunde, ein Verfahren für Teilnehmer eines Kommunikationsnetzes und die zu seiner Ausführung erforderlichen Mittel schaffen, welche es erlauben, eine Kommunikation mittels einer gesicherten Information über den Entstehungs- oder Absendeort elektronischer Daten zu sichern.

Erfindungsgemäß wird diese Aufgabe durch ein Verfahren nach der Lehre des Anspruchs 1, ein Kommunikationsnetz nach der Lehre des Anspruchs 9, eine Netzeinrichtung nach der Lehre des Anspruchs 10, ein Programmmodul nach der Lehre des Anspruchs 11 und ein Teilnehmerendgerät nach der Lehre des Anspruchs 12 gelöst.

Grundgedanke der Erfindung ist es, elektronischen Daten, welche zwischen einem ersten Teilnehmerendgerät an ein zweites Teilnehmerendgerät oder eine netzseitige Einrichtung (Diensterechner) übermittelt werden, mit einer gesicherten Information über den zum Entstehungs- oder Sendezeitpunkt aktuellen Ort des sendenden Teilnehmerendgeräts oder Ortsstempel zu versehen oder diese Information mit den elektronischen Daten zu verknüpfen.

In einer vorteilhaften Weiterbildung werden die elektronischen Daten zusätzlich mit einer gesicherten Information über den Entstehungs- oder Sendezeitpunkt (Zeitstempel) zu versehen.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnung weiter erläutert:

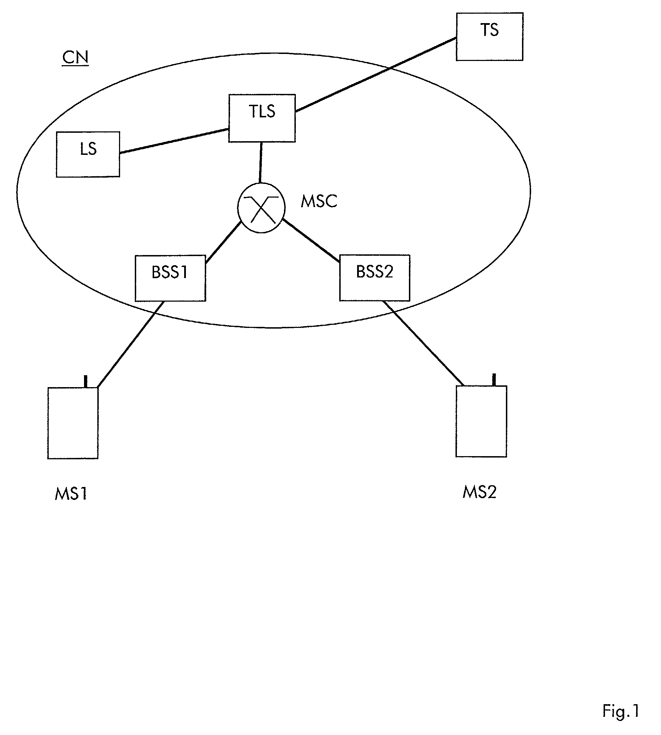

- Fig. 1: zeigt schematisch ein erfindungsgemäßes Kommunikationsnetz zur Ausführung des erfindungsgemäßen Verfahrens.

Fig.1 zeigt ein Mobilfunknetz CN, welches beispielhaft eine (Mobilfunk-) Vermittlungsstelle MSC (engl.: mobile switching center), ein erstes (Mobilfunk-) Basissubsystem BSS1 (engl.: base sub system) und ein zweites Basissubsystem BSS1 und weiter einen Ortungsserver LS und eine Einrichtung zur Orts- und Zeitzertifizierung TLS aufweist, im folgenden kurz Zertifizierungsserver TLS genannt. Weiter ist extern eine Einrichtung zur Generierung von Zeitsignalen TS dargestellt, im folgenden Zeitgeber TS genannt. Beispielhaft ist ein erstes (Mobilfunk-) Endgerät MS1 über eine Luftschnittstelle mit dem ersten Basissubsystem BSS1 und ein zweites Endgerät MS2 mit dem zweiten Basissubsystem BSS2 verbunden. Beide Basissubsysteme BSS1 und BSS2 sind mit der Vermittlungsstelle MSC verbunden. Der Zertifizierungsserver TLS ist jeweils mit der Vermittlungsstelle MSC, dem Zeitserver TS und dem Ortungsserver LS verbunden.

Prinzipiell ist die Erfindung unabhängig von der Art der Ortungsverfahren und von der Ausprägung der Kommunikationsnetze, über welche die Endgeräte MS1 und MS2 elektronische Daten austauschen. Das erfindungsgemäße Verfahren lässt sich zwischen beliebigen Endgeräten (fest oder mobil) eines beliebigen Kommunikationsnetzes (z.B. öffentliches Fernsprechnetz, Mobilfunknetz oder Internet) autonom ohne Mitwirkung des Kommunikationsnetzes bei der Ortserfassung und Ortszertifizierung (Ortsstempel) durchführen, beispielsweise mittels des eingangs erwähnen Satellitenortungssystem GPS. Da die Erfindung jedoch besonders vorteilhaft in Mobilfunknetzen ausgeführt werden kann und in diesen Netzen bereits heute Ortungsverfahren durchgeführt werden, werden im folgenden hauptsächlich Mobilfunknetze und Ortungsverfahren in Mobilfunknetzen betrachtet, welche mit bestehenden Netzeinrichtungen zusammenwirken und/oder in bestehende Verfahren integriert werden können.

Der Zertifizierungsserver TLS kann mehrere Kommunikationsverbindungen gleichzeitig terminieren. Er stellt hier eine netzseitige sichere Instanz dar, die vor möglichen Manipulationen der Teilnehmer oder Dritter gesichert ist.

Das Mobilfunknetz CN stellt beispielsweise ein zelluläres digitales Kommunikationsnetz nach dem weit verbreiteten GSM-Standard (engl.: Global System for Mobile Communication) dar. Dabei handelt es sich um ein Netzwerk mit der Möglichkeit des Versendens elektronischer Daten oder Dokumente. So bietet der in GSM-Netzen angebotene "General Packet Radio Service" (GPRS) die Möglichkeit, elektronische Dokumente mit einer Übertragungsrate bis zu etwa 170 Kilobit pro Sekunde zu übertragen. Das Versorgungsgebiet des Mobilfunknetzes CN ist in eine Vielzahl von Teilgebieten oder Funkzellen unterteilt. In der Regel ist jeder dieser Funkzellen einer Basisstation (engl.: Base Transceiver Station, BTS) zugeordnet. Jede der Basissubsysteme BSS1 oder BSS2 bestehend aus mindestens einer Basisstation und einer Basissteuereinheit (engl.: Base Station Controller, BSC).

Diese mit Sende- und Empfangseinrichtungen versehenden Basisstationen bilden netzseitig die Endpunkte der Funkübertragung zwischen den Endgeräten MS1 und MS2 und den Netzeinrichtungen des Mobilfunknetzes CN. Ein oder mehrere Basisstationen sind an eine Basissteuereinheit (BSC) angeschlossen, welche die Sende- und Empfangsressourcen der an ihn angeschlossenen Basisstationen verwaltet.

Neben der Kontrolle des Datenverkehrs zwischen den Basisstationen und Mobilfunkvermittlungsstellen (engl.: Mobile Switching Center, MSC) besteht eine wesentliche Aufgabe einer Basissteuereinheit darin, sogenannte handover Prozesse durchzuführen, d.h. eine Verbindung eines Endgeräts mit dem Mobilfunknetz von einer zur nächsten Zelle weiter zu reichen. In GSM-Netzen werden handover Prozesse grundsätzlich netzseitig angefordert. Dazu registrieren die Endgeräte in regelmäßigen Abständen Empfangspegel und -qualität des aktuellen Verkehrskanals sowie von einem oder mehreren Nachbarkanälen und liefern einen Messbericht. In geeigneten Einrichtungen des Mobilfunknetzes, beispielsweise der aktuell zuständigen Basissteuereinheit (bei sogenanntem Intra-BSC handover) oder in der übergeordneten Mobilfunkvermittlungsstelle (bei sogenanntem Inter-BSC handover) wird dann eine Entscheidung über ein handover getroffen und diese Entscheidung dem betroffenen Mobilfunkgerät mitgeteilt.

Theoretisch ist mit dem vorhin vorgestellten Mechanismus eine Ortung von Endgeräten bis auf die Ebene der Zellen möglich. In der Regel werden jedoch mehrere Zellen zu einem geographischen Bereich oder einer sogenannten location area zusammengefasst. Wenn ein Endgerät einen geografischen Bereich des Netzes verlässt und in einen neuen geografischen Bereich eintritt, wird dieser Teilnehmer und der neue geografische Bereich in der eingangs beschriebenen Besucherdatei (VLR) vermerkt. Je nach Mobilfunknetz kann ein geographischen Bereich eine recht große Fläche (beispielsweise mehrere tausend Quadratkilometer) einnehmen.

Wie eingangs beschrieben sind eine Reihe von Verfahren bekannt, mit dessen Hilfe eine wesentlich genauere Ortung von Endgeräten eines Mobilfunknetzes als in den letzten Absätzen beschrieben ermöglicht wird. Für das folgende Ausführungsbeispiel soll ein eingangs beschriebenes Verfahren betrachtet werden, bei welchem beispielsweise ein zu ortendes erstes Endgerät MS1 von verschiedenen Basisstationen innerhalb eines unbestimmten Umkreises in bestimmten Zeitabständen synchronisiert gesendete Pilotsignale empfängt. Das erste Endgerät MS1 ermittelt die Laufzeitdifferenzen der empfangenen Pilotsignale zueinander und sendet diese Messergebnisse an den Ortungsserver LS. Bei bekannter Ausbreitungsgeschwindigkeit (Lichtgeschwindigkeit) der Signale können diese Laufzeitdifferenzen dort direkt in Entfernungsdifferenzen der entsprechenden Basisstationen zum ersten Endgerät MS1 umgerechnet werden. Bei der Annahme einer ebenen Fläche genügt die Auswertung der Pilotsignale dreier Basisstationen zur Bestimmung der Flächenkoordinaten des Endgeräts MS1 (zwei relative Laufzeitdifferenzen). Zur dreidimensionalen Bestimmung müssen mindestens vier verschiedene Pilotsignale ausgewertet werden (drei relative Laufzeitdifferenzen). Der Ortungsserver LS kennt die Ortskoordinaten (beispielsweise als Längen und Breitenangabe oder als Wertepaare spezieller geographischer Koodinatensysteme) der betreffenden Basisstationen und kann mit dieser Information und der Information über die genannten Entfernungsdifferenzen die Ortsbestimmung ersten Endgeräts vornehmen, d.h. die Ortskoodinaten bestimmen. Da eine bestimmte Unschärfe in der Bestimmung der Entfernungsdifferenzen angenommen werden muss, ergibt sich folglich eine bestimme Unschärfe bei der Bestimmung der Ortskoordinaten.

Wenn nun das erste Endgerät MS1 dem zweiten Endgerät MS2 ein elektronisches Dokument übermitteln und diesem Dokument eine Information über den Ort des Absendens dieses Dokuments, d.h. einen Ortsstempel, hinzufügen will, so ergeben sich zwei Alternativen. In einer ersten Alternative empfängt des erste Endgerät MS1, beispielsweise auf Anforderung oder zyklisch, seine Ortskoordinaten vom Ortungsserver LS. Der Ortungsserver kann statt dieser Ortskoordinaten auch bereits die entsprechende Stadt, den Stadtteil oder sonstige Ortsinformation an das erste Endgerät MS1 übermitteln. Das erste Endgerät MS1 fügt dem elektronischen Dokument einen entsprechenden aktuellen Ortsstempel hinzu und übermittelt dieses Dokument inklusive dieses Ortsstempels an das zweite Endgerät MS2.

In einer zweiten Alternative übermittelt das erste Endgerät das elektronische Dokument zusammen mit einer Zieladresse des Empfängers, d.h. des zweites Endgeräts MS2, an einen mit dem Ortungsserver LS verbundene zentrale Netzeinrichtung oder Zertifizierungsserver TLS. Der Zertifizierungsserver TLS fügt diesem Dokument die aktuelle Ortsinformation hinzu und übermittelt das elektronische Dokument mit diesem Ortsstempel an den Empfänger MS2. Diese Alternative hat gegenüber der ersten Alternative den Vorteil, dass der Ortsstempel, insbesondere bei einer im folgenden beschriebenen elektronischen Signatur des mit dem Ortsstempel versehenen oder verknüpften elektronischen Dokuments im Zertifizierungsserver, in hohem Maße vertrauenswürdig ist, da eine Manipulation, d.h. bewusste Verfälschung der Ortsinformation, dann praktisch ausgeschlossen werden kann.

Da im Zusammenhang mit der Ortszertifizierung eine Zeitzertifizierung naheliegend ist und sich zusätzlich aus einer Kombination von Zeit- und Ortszertifizerung vorteilhafte, im folgenden näher beschriebene Effekte ergeben, wird bei den im folgenden beschriebenen Verfahren zusätzlich zur Ortszertifizierung (Ortsstempel) stets auch eine Zeitzertifizierung (Zeitstempel) vorgenommen. Dazu erhält eine geeignete zentrale Netzeinrichtung, beispielsweise der Zertifizierungsserver TLS vom externen Zeitgeber TS zyklisch eine amtliches Zeitsignal, beispielsweise in Deutschland das bekannte Zeitsignal DCF77 der Physikalisch Technischen Bundesanstalt in Braunschweig.

In einer der vorhergehend beschriebenen ersten Alternative erhält das erste Endgerät MS1 mittels des Zertifizierungsservers TLS zyklisch Zeitsignale zur Synchronisierung einer Endgerät-internen Uhr. Das erste Endgerät MS1 fügt dem elektronischen Dokument zusätzlich zum aktuellen Ortsstempel einen entsprechenden aktuellen Ortsstempel hinzu und übermittelt dieses Dokument inklusive des Ortsstempels und des Zeitstempels an das zweite Endgerät MS2.

In einer der vorhergehend beschriebenen zweiten Alternative findet die Zeitzertifizierung zusätzlich zur Ortszertifizierung im Zertifizierungsserver TLS statt. Der Zertifizierungsserver TLS fügt diesem Dokument die aktuelle Ortsinformation und die aktuelle Zeitinformation zum Zeitpunkt des Empfangs des elektronischen Dokuments hinzu, d.h. und übermittelt das elektronische Dokument inklusive des Ortsstempels und des Zeitstempels an das zweite Endgerät MS2.

Zur Vermeidung von Manipulationen im ersten Endgerät MS1 können spezielle Sicherungen im ersten Endgerät MS1 vorgesehen werden, beispielsweise indem bestimmte Funktionen von einer nicht ohne weitere zugänglichen sogenannten Smartcard ausgeführt werden. Eine weitere Möglichkeit besteht darin, im netzseitigen Zertifizierungsserver TLS die jeweils aktuelle Ortsinformation des ersten Endgeräts MS1 mit einem aktuellen Zeitstempel zu versehen und diese Information mit einer elektronischen Signatur zu versehen, beispielsweise mittels eines (geheimen) privaten Schlüssels bei einem eingangs beschriebenen asynchronen Signaturverfahrens. Diese signierte Orts- und Zeitinformation wird vom Zertifizierungsserver TLS, beispielsweise auf Anforderung des ersten Endgeräts MS1 oder in zyklischen Zeitabständen, an dieses Endgerät MS1 übermittelt. Das erste Endgerät MS1 fügt nun diese bzw. die zuletzt empfangene Information (Orts- und Zeitstempel und Signatur des Zertifizierungsservers TLS) unverändert an das zu übertragende elektronische Dokument an. Mittels des zum geheimen Schlüssel passenden öffentlichen Schlüssels kann der Empfänger MS2 einerseits die Authentizität der Signatur (d.h. Prüfung, ob die Information tatsächlich vom Zertifizierungsserver TLS stammt) und die Integrität des Orts- und Zeitstempels (d.h. Prüfung, ob diese Information unverfälscht empfangen wurde) prüfen. Zusätzlich zu einer Signierung durch den Zertifizierungsserver TLS kann auch eine Signierung durch den Absender MS1 erfolgen. Mittels der Prüfung dieser Signatur kann der Empfänger MS2 prüfen, ob die signierten Daten unverfälscht übertragen wurden.

Eine weitere Möglichkeit zur Vermeidung von Manipulationen eines elektronischen Dokuments auf dem Übertragungsweg von einem sendenden ersten Endgerät MS1 zu einem empfangenden zweiten Endgerät MS2 und zu Vermeidung der Manipulation eines Orts- oder Zeitstempels entweder im ersten Endgerät MS1 selber oder ebenfalls auf dem Übertragungsweg besteht darin, dass das erste Endgerät MS1 das zu übermittelnde elektronische Dokument mittels seines geheimen Schlüssels elektronisch signiert und an den Zertifizierungsserver TLS sendet. Zur Ermittlung des aktuellen Ortes fordert der Zertifizierungsserver TLS vom Ortungsserver LS eine aktuelle Ortsinformation (bestimmte Ortskoordinaten, Stadt oder sonstige politische Gebietseinheit. Mittels einer mit einem amtlichen Zeitsignal eines externen Zeitgebers TS (z.B. DCF77-Signal) mit dessen Uhr synchronisierten Uhr wird der Zeitpunkt des Empfangs des elektronischen Dokuments ermittelt. Aus dieser Information und der Ortsinformation wird ein Orts- und Zeitstempel gebildet und dieser Orts- und Zeitstempel zusammen mit dem elektronischen Dokument anschließend mittels eines privaten Schlüssels des Zertifizierungsservers elektronisch signiert. Der Zertifizierungsserver TLS übermittelt das mit dem Orts- und Zeitstempel versehene und signierte elektronische Dokument anschließend an das zweite Endgerät MS2. Alternativ kann das erste Endgerät MS1 das zweite Endgerät darüber informieren, dass das elektronische Dokument im Zertifizierungsserver TLS vorliegt. Das zweite Endgerät MS2 kann dann eine Verbindung zu dem Zertifizierungsserver TLS herstellen und das genannte Dokument abholen oder herunterladen. Mittels der Signaturen und des Orts- und Zeitstempels kann das zweite Endgerät die Authentizität, die Integrität, die Absendezeit (genauer: die geringfügig spätere Empfangszeit im Zertifizierungsserver TLS) und den Absendeort des elektronischen Dokuments prüfen oder verifizieren.

Zur Sicherung gegen unbefugtes Benutzen des ersten Endgeräts MS1, insbesondere im Zusammenhang mit Bezahlvorgängen, kann für bestimmte Funktionen, beispielsweise die Funktion zum Signieren von Daten oder die Funktionen zum Erzeugen der Orts- oder Zeitstempel durch jeweils eine separate oder eine gemeinsame sogenannte persönliche Identifizierungsnummer (engl.: personal identification number, PIN) vorgesehen werden. Damit kann sichergestellt werden, dass ein unbefugter Benutzer, solange er keine Kenntnis der Identifizierungsnummern erlangt, keine sensiblen Vorgänge auslösen kann.

Der Zertifizierungsserver TLS kann aus einem zentralen Rechner mit Hardund Software oder einem Rechnerverbund oder aus mehreren dezentralen miteinander kommunizierenden Rechnern bestehen. Insbesondere können verschiedene Aufgaben, beispielsweise die Datenverwaltung, die Teilnehmerkommunikation, die Generierung des Orts- und Zeitstempels und eine optional durchgeführte Verschlüsselung, Entschlüsselung, Signatur oder Signaturkontrolle jeweils physikalisch verschiedenen Rechnern zugewiesen werden. Bei dem Zertifizierungsserver TLS kann es sich auch um einen Server einer eingangs beschriebenen Zertifizierungsstelle eines Zertifizierungsdienstes handeln.

Das erfindungsgemäße Verfahren ist unabhängig von der physikalischen Ausprägung oder von den Kommunikationsprotokollen des Kommunikationsnetzes CN. Vorteilhaft kann das erfindungsgemäße Verfahren vor allem auch in zukünftigen Mobilfunknetzen nach dem sogenannten UMTS-Standard (UMTS = Universal Mobile Telecommunications System) angewandt werden.

## Patentansprüche

1. Verfahren zur Sicherung einer Kommunikation zwischen einem ersten Teilnehmerendgerät (MS1) eines Kommunikationsnetzes (CN) und einem zweiten Teilnehmerendgerät (MS2) oder einem Diensterechner des Kommunikationsnetzes (CN), **dadurch gekennzeichnet, dass** es folgende Schritte aufweist:
• Bereitstellen von elektronischen Daten im ersten Teilnehmerendgerät (MS1) zur Übermittlung an das zweite Teilnehmerendgerät (MS2) oder den Diensterechner,
• Ermitteln gesicherter Information über den Ort des ersten Teilnehmerendgeräts (MS1) und Generieren eines elektronischen Ortsstempels,
• Verknüpfen der elektronischen Daten mit dem elektronischen Ortstempel
• und Übermitteln dieser verknüpften Daten an das zweite Teilnehmerendgerät (MS2) oder an den Diensterechner.

2. Verfahren nach Anspruch 1, **dadurch gekennzeichnet, dass** die aktuelle Zeit ermittelt wird, eine elektronischer Zeitstempels generiert wird und die elektronischen Daten zusätzlich mit diesem Zeitstempel verknüpft werden.

3. Verfahren nach Anspruch 2, **dadurch gekennzeichnet, dass** der elektronischen Zeitstempel und der elektronische Ortsstempel im ersten Teilnehmerendgerät (MS1) gebildet werden, dort mit den elektronischen Daten verknüpft werden und anschließend unmittelbar an das zweite Teilnehmerendgerät oder den Diensterechner übermittelt werden.

4. Verfahren nach Anspruch 2 **dadurch gekennzeichnet, dass** das Teilnehmerendgerät (MS1) in jeweils bestimmten Zeitabständen die aktuelle Zeit und aktuelle Ortsinformation von einer geeigneten Netzeinrichtung empfängt.

5. Verfahren nach Anspruch 2, **dadurch gekennzeichnet, dass** eine Netzeinrichtung (TLS) auf Anforderung des ersten Teilnehmerendgeräts (MS1) die aktuelle Zeit zum Empfang der elektronischen Daten und den aktuellen Ort des ersten Teilnehmerendgeräts (MS1) ermittelt, die aktuelle Zeit und den aktuellen Ort zu einem elektronischen Zeit- und Ortsstempel verknüpft, und diesen Zeit- und Ortsstempel an das erste Teilnehmerendgerät (MS1) übermittelt.

6. Verfahren nach Anspruch 2, **dadurch gekennzeichnet, dass** das erste Teilnehmerendgerät (MS1) die elektronischen Daten an eine Netzeinrichtung (TLS) übermittelt, diese Netzeinrichtung (TLS) die aktuelle Zeit zum Empfang der elektronischen Daten und den aktuellen Ort des ersten Teilnehmerendgeräts (MS1) ermittelt, den entsprechenden elektronischen Zeitstempel und den entsprechenden elektronische Ortsstempel bildet, die Verknüpfung mit den elektronischen Daten durchführt und anschließend die mit dem Zeitstempel und Ortsstempel verknüpften elektronischen Daten an das zweite Teilnehmerendgerät (MS2) oder den Diensterechner übermittelt.

7. Verfahren nach Anspruch 4, **dadurch gekennzeichnet, dass** das Teilnehmerendgerät zur Bestimmung seines aktuellen Ortes Messdaten an eine Netzeinrichtung (LS) übermittelt.

8. Verfahren nach Anspruch 1, **dadurch gekennzeichnet, dass** die zu übermittelnden Daten vom jeweiligen Sender (MS1, TLS) zur Sicherung der Authentizität elektronisch signiert werden.

9. Kommunikationsnetz (CN) mit einer netzseitigen Einheit (TLS) zur Sicherung einer Kommunikation zwischen einem ersten Teilnehmerendgerät (MS1) und einem zweiten Teilnehmerendgerät (MS2) oder einem Diensterechner, **dadurch gekennzeichnet, dass** folgenden Mittel vorhanden sind:
• Empfangsmittel zum Empfang von elektronischen Daten eines Teilnehmerendgeräts (MS1),
• Generierungsmittel zum Generieren eines eine gesicherte Information über den aktuelle Ort des ersten Teilnehmerendgeräts (MS1) beinhaltenden elektronischen Ortsstempels,
• Verknüpfungsmittel zum Verknüpfen der elektronischen Daten mit dem elektronischen Ortstempel und
• Sendemittel zum Übermitteln dieser verknüpften Daten an das zweite Teilnehmerendgerät (MS2) oder den Diensterechner.

10. Netzeinrichtung (TLS) eines Kommunikationsnetzes (CN) zur Sicherung einer Kommunikation zwischen einem ersten Teilnehmerendgerät (MS1) und einem zweiten Teilnehmerendgerät (MS2) oder einem Diensterechner, **dadurch gekennzeichnet, dass** folgenden Mittel vorhanden sind:
• Empfangsmittel zum Empfang von elektronischen Daten eines Teilnehmerendgeräts (MS1),
• Generierungsmittel zum Generieren eines eine gesicherte Information über den aktuelle Ort des ersten Teilnehmerendgeräts (MS1) beinhaltenden elektronischen Ortsstempels,
• Verknüpfungsmittel zum Verknüpfen der elektronischen Daten mit dem elektronischen Ortstempel und
• Sendemittel zum Übermitteln dieser verknüpften Daten an das zweite Teilnehmerendgerät (MS2) oder den Diensterechner.

11. Programmmodul zum Ablauf in einer netzseitigen Einheit (TLS) eines Kommunikationsnetzes (CN) zur Sicherung einer Kommunikation zwischen einem ersten Teilnehmerendgerät (MS1) und einem zweiten Teilnehmerendgerät (MS2) oder einem Diensterechner, **dadurch gekennzeichnet, dass** Mittel zur Steuerung der folgenden Schritte vorhanden sind:
• Empfang von elektronischen Daten eines Teilnehmerendgeräts (MS1),
• Generieren eines eine gesicherte Information über den aktuellen Ort des ersten Teilnehmerendgeräts (MS1) beinhaltenden elektronischen Ortsstempels,
• Verknüpfen der elektronischen Daten mit dem elektronischen Ortstempel und
• Übermitteln dieser verknüpften Daten an das zweite Teilnehmerendgerät (MS2) oder den Diensterechner.

12. Teilnehmerendgerät (MS1) eines Kommunikationsnetzes (CN) zum Ausführen einer gesicherten Kommunikation mit einem zweiten Teilnehmerendgerät (MS2) oder einem Diensterechner, **dadurch gekennzeichnet, dass** folgenden Mittel vorhanden sind:
• Generierungsmittel zum Generieren eines eine gesicherte Information über den aktuelle Ort des ersten Teilnehmerendgeräts (MS1) beinhaltenden elektronischen Ortsstempels,
• Verknüpfungsmittel zum Verknüpfen elektronischen Daten mit dem elektronischen Ortstempel und
• Sendemittel zum Übermitteln dieser verknüpften Daten an das zweite Teilnehmerendgerät (MS2) oder den Diensterechner.
